# EUROPÄISCHE PATENTANMELDUNG

(11) **EP 0 612 583 A1**
(43) Veröffentlichungstag der Anmeldung: **31.08.1994**
(21) Anmeldenummer: 94810019.3
(22) Anmeldetag: 14.01.1994
(51) Int. Cl.: B23Q 11/16, B24B 1/04

(54) **Vorrichtung zum Rückziehen eines Arbeitsschlittens einer Werkzeugmaschine, insbesondere einer Ultraschall-Bearbeitungsmaschine**

(30) Priorität: 25.01.1993 CH 203/93
(71) Anmelder: EROSONIC AG i.K., CH-9630 Wattwil (CH)
(72) Erfinder: Bauer, Hans, CH-9630 Wattwil (CH); Bory, Michael, CH-9630 Wattwil (CH)
(74) Vertreter: Münch, Otto

(57) **Zusammenfassung**

Auf Führungen (1) eines Gestells (2) ist ein Schlitten (3) in Vorschubrichtung (A) verschiebbar geführt. Der Schlitten (3) trägt ein Ultraschallbearbeitungsgerät (4) und wird durch einen ersten Zylinder (7) mit einer einstellbaren Kraft in Vorschub- richtung (A) belastet. Am Schlitten (3) ist ein Zylinder (15) befestigt, um den ein Seil (17) mit einer Schlaufe (16) von 360 Grad geschlungen ist. Das eine Ende (18) des Seils (17) ist durch eine vorgespannte Feder (20) gegen einen gehäusefesten Anschlag (21) vorbelastet. Das andere Ende (22) des Seiles (17) ist an der Kolbenstange (24) eines zweiten Zylinders (25) befestigt. Durch diesen zweiten Zylinder kann während der Bearbeitung das Werkzeug (5) vom Werkstück (6) abgehoben werden, unabhängig von der Schlittenposition. Nach dem Abheben setzt das Werkzeug (5) sanft wieder auf die erneuerte Schleifschicht auf.

## Beschreibung

Die Problematik des Tiefbohrens ist in der metallbearbeitenden Industrie hinreichend bekannt. Hersteller numerischer Steuerungen bieten fertige Programme an. Der Bohrer wird gemäss Programm nach Erreichen von vorprogrammierten Tiefen zurückgezogen, um Späne zu entfernen. Nachher kehrt der Bohrer auf die bereits erreichte Bohrtiefe zurück und setzt die Bohrarbeit fort. In der metallbearbeitenden Anwendung ist dies möglich, weil Bearbeitungsparameter wie Drehzahl und Vorschubgrösse eingehalten werden können.

Anders ist dies bei der Ultraschall-Erosion (s. "Keramikbearbeitung", Carl Hauser Verlag, München 1989, Seiten 423 bis 443). Hier führt die Kraftregelung den Abtragungsprozess. Dies heisst, dass es nicht um die Einhaltung einer Vorgabe, sondern um eine bestmögliche Anpassung an aktuelle technologische Möglichkeiten geht. Eine Sonotrodenabhebung sollte jederzeit und bei jeder beliebigen Bohr- oder Senktiefe möglich sein, um die Abtragsleistung zu erhöhen. Durch Entlastung und Abhebung der Sonotroden gelangen neue, scharfte Schleifkörner in die Arbeitszone. Besonders wichtig ist dies, wenn kein Vacuum eingesetzt werden kann, um den Kornwechsel zu aktivieren.

N.C. geführte Abhebezyklen sind zu diesem Zweck wenig geeignet: Sie sind positionsgebunden und zeitlich nicht beliebig einsetzbar. Sie sind kompliziert, weil die bereits erreichte Bohrtiefe gespeichert werden muss. Nach einem Abhebezyklus kehrt das Werkzeug zwangsläufig auf die bereits gebohrte Tiefe zurück. Dabei kann es zu Ueberlast oder Schlägen kommen, weil während des Abhebens die Bohrung oder gesenkte Fläche mit Schleifmittel bedeckt wird.

Der vorliegenden Erfindung liegt die Aufgabe zugrunde, eine Vorrichtung zum Rückziehen eines Arbeitsschlittens einer Werkzeugmaschine anzugeben, die sich auch bei kraftgeregelten Vorschubantrieben eignet. Diese Aufgabe wird durch die kennzeichnenden Merkmale des Anspruchs 1 gelöst.

Nachfolgend wird ein Ausführungsbeispiel der Erfindung anhand der Zeichnungen erläutert. Darin zeigt:
- Figur 1: einen schematischen Längsschnitt durch eine Werkzeugmaschine, und
- Figur 2: eine Variante der Abhebevorrichtung.

Auf Längsführungen 1 eines Maschinengestells 2 ist ein Schlitten 3 verschiebbar geführt. Am Schlitten 3 ist ein Ultraschallwandler 4 befestigt, der ein Bearbeitungswerkzeug 5 in Longitudinalschwingungen versetzt. Das Werkzeug 5 schwingt in Vorschubrichtung A und bearbeitet ein auf dem Gestell 2 aufgespanntes Werkstück 6. Der Schlitten 3 ist durch einen Pneumatikzylinder 7 mit einer einstellbaren Kraft Tₒ in Vorschubrichtung A belastet. Mittels einer Schraube 8, die in einen an der Kolbenstange 9 befestigten Arm 10 eingeschraubt ist und gegen einen gehäusefesten Anschlag 11 wirkt, ist die Bohrtiefe 12 einstellbar.

Am Schlitten 3 ist ein Zylinder 15 befestigt, dessen Achse senkrecht zur Vorschubrichtung A steht. Um den Zylinder 15 ist eine lose Schlaufe 16 eines Drahtseils 17 oder eines Federstahldrahtes gelegt. Das erste Ende 18 des Seils 17 ist an einem Block 19 befestigt, der durch eine vorgespannte Feder 20 gegen einen gehäusefesten Anschlag 21 gezogen ist. Das zweite Ende 22 des Seils 17 ist an einer Schraube 23 befestigt, die in die Kolbenstange 24 eines weiteren Pneumatikzylinders 25 eingeschraubt ist. An der Kolbenstange 24 ist ein Arm 26 befestigt, der bei Betätigung des Zylinders 25 gegen eine einstellbare Anschlagschraube 27 anschlägt. Mit der Schraube 27 lässt sich der Hub 28 der Kolbenstange 24 einstellen. Damit wird der Abhebehub des Schlittens 3 grob eingestellt. Die Feineinstellung erfolgt mittels der Schraube 23, mit der die Differenz zwischen der Länge der losen Schlaufe 16 und dem Umfang des Zylinders 15 eingestellt wird.

Die Vorspannkraft der Feder 20 wird so eingestellt, dass bei Betätigung des Zylinders 25 die Seilreibung der Schlaufe 16 am Zylinder 15 ausreicht, um die Vorschubkraft Tₒ zu überwinden.

Die Betriebsweise ist wie folgt: Während des Betriebs wird der Zylinder 7 mit dem gewählten Druck entsprechend der gewünschten Vorschubkraft beaufschlagt. Der Zylinder 25 ist in der gezeigten Grundstellung und damit die Schlaufe 16 lose. Der Schlitten 3 kann sich frei in Vorschubrichtung A bewegen, so dass das Werkzeug 5 das Werkstück 6 bearbeitet.

Wenn das Werkzeug 5 abgehoben werden soll, wird der Zylinder 25 beaufschlagt, so dass seine Kolbenstange 24 gegen die Anschlagschraube 27 fährt. Dabei wird zunächst die Schlinge 16 straff gezogen und anschliessend der Schlitten 3 entgegen der Vorschubrichtung A mitgenommen. Beim Abheben wird die Schleifemulsion im Bohrloch erneuert. Wenn der Zylinder 25 wieder ausgeschaltet wird, fährt der Schlitten 3 wieder zurück und das Werkzeug 5 setzt sanft mit der eingestellten Vorschubkraft auf die erneuerte Schleifemulsion auf. Es erzwingt also nicht die bereits erreichte Senktiefe.

Der Abhebevorgang kann an jeder beliebigen Schlittenposition aktiviert werden. Zweckmässig wird er in regelmässigen Abständen, zum Beispiel gesteuert durch ein Zeitglied, durchgeführt. Die Hubgrösse beim Abheben ist einstellbar. Beim Aufsetzen des Werkzeugs auf die Schleifmittelschicht wird die Vorschubkraft nicht überschritten, da sich das Werkzeug auf das mit Schleifmittelschicht überzogene Werkstück aufsetzt und nicht die bereits erreichte Senktiefe erzwingt.

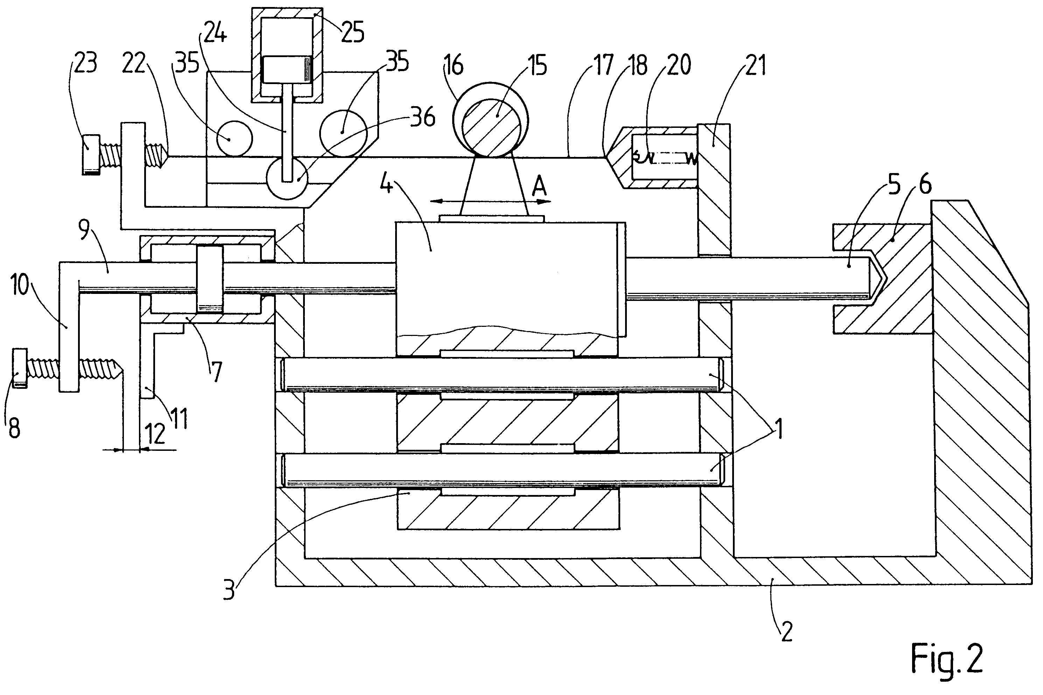

Figur 2 zeigt eine Variante des Hubelementes zum Abheben des Werkzeuges 5, bei welcher die Anfahr- und Rückstellbeschleunigungen beim Abheben und Aufsetzen des Werkzeuges 5 reduziert werden. Das Seil 17 ist über zwei gestellfest gelagerte Rollen 35 geführt. Die Kolbenstange 24 steht senkrecht zur Vorschubrichtung A und trägt eine weitere Rolle 36, mit welcher das Seil 17 zwischen den beiden Rollen 35 angehoben wird.

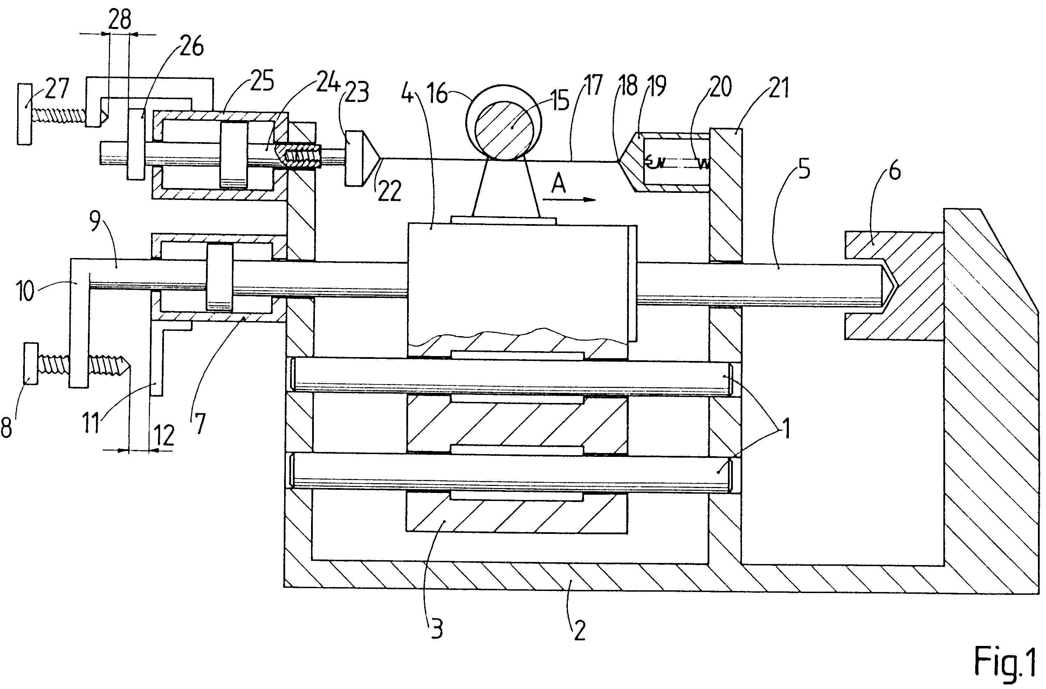

Bei den Ausführungsformen nach Fig. 1 und 2 wird das mit dem zweiten Zylinder 25 zusammenwirkende Klemmorgan durch die Schlaufe 16 und den Zylinder 15 gebildet. Das Klemmorgan zur Kupplung der Kolbenstange 24 mit dem Schlitten 3 in jeder beliebigen Schlittenstellung kann jedoch auch anders ausgebildet werden, z.B. als mit der Kolbenstange 24 verschiebbares Bremsschuhpaar, das gegen eine am Schlitten 3 befestigte Schiene wirkt und in der Grundstellung der Kolbenstange 24 von dieser Schiene abgehoben ist, z.B. durch einen gehäusefesten Keil.

## Patentansprüche

1. Vorrichtung zum Rückziehen eines Arbeitsschlittens (3) einer Werkzeugmaschine, insbesondere einer Ultraschallbearbeitungsmaschine, wobei der Schlitten (3) auf Führungen (1) eines Gestells (2) in einer Bewegungsrichtung verschiebbar geführt und durch ein erstes Huborgan (7) mit einer einstellbaren Kraft in Vorschubrichtung (A) belastbar ist, dadurch gekennzeichnet, dass ein Klemmorgan (15, 16) und ein mit diesem zusammenwirkendes zweites Huborgan (25) vorhanden ist, um den Schlitten (3) entgegen der Vorschubkraft des ersten Hugorgans (7) zurückzuziehen.

2. Vorrichtung nach Anspruch 1, dadurch gekennzeichnet, dass das Klemmorgan (15, 16) aus einem am Schlitten (3) befestigten Mitnehmer (15) und einer um den Mitnehmer (15) geschlungenen Schlaufe (16) eines biegsamen Zugorgans (17) besteht, dessen erstes Ende (18) durch ein vorgespanntes Zugeleement (20) gegen einen gestellfesten Anschlag (21) vorbelastet und dessen zweites Ende (22) am zweiten Huborgan (25) befestigt ist.

3. Vorrichtung nach Anspruch 2, dadurch gekennzeichnet, dass der Mitnehmer (15) eine abgerundete, vorzugsweise zylindrische Anlagefläche für das Zugorgan (17) hat.

4. Vorrichtung nach Anspruch 2 oder 3, dadurch gekennzeichnet, dass das Zugorgan ein Draht, ein Seil oder ein Band ist.

5. Vorrichtung nach einem der Ansprüche 2 bis 4, dadurch gekennzeichnet, dass das Zugorgan (17) biegeelastisch ist, so dass die Schlaufe (16) bei gelöstem Zugorgan (17) vom Mitnehmer (15) abhebt.

6. Vorrichtung nach einem der Ansprüche 2 bis 5, dadurch gekennzeichnet, dass der Umschlingungswinkel des Zugorgans (17) um den Mitnehmer (15) mindestens 360 Grad beträgt.

7. Vorrichtung nach einem der Ansprüche 1 bis 6, dadurch gekennzeichnet, dass das zweite Huborgan (25) Getriebemittel (35, 36) hat, welche die Bewegung beim Aufsetzen und Abheben des Werkzeuges (5) untersetzen.

8. Vorrichtung nach einem der Ansprüche 2 bis 7, dadurch gekennzeichnet, dass die Differenz zwischen dem Umschlingungsumfang des Zugorgans (17) und dem Umfang des Mitnehmers (15) einstellbar ist.

9. Vorrichtung nach einem der Ansprüche 2 bis 8, dadurch gekennzeichnet, dass das zweite Huborgan (25) zwei gehäusefeste Umlenkrollen (35) sowie eine durch ein Hubelement (24) betätigbare dritte Umlenkrolle (36) umfasst, wobei das Zugelement (17) über alle drei Umlenkrollen (35, 36) läuft.

10. Vorrichtung nach einem der Ansprüche 1 bis 9, dadurch gekennzeichnet, dass der Hub des zweiten Huborgans (25) einstellbar ist.
